# EUROPEAN PATENT APPLICATION

(11) **EP 4 510 024 A1**
(43) Date of publication of application: **19.02.2025**
(21) Application number: 23191696.6
(22) Date of filing: 16.08.2023
(51) Int. Cl.: G06F 21/53, G06F 21/54, G06F 21/55

(54) **VEHICLE, APPARATUS, COMPUTER PROGRAM, AND METHOD FOR A DATA PROCESSING CIRCUIT AND FOR EXECUTING APPLICATIONS**

(71) Applicant: Elektrobit Automotive GmbH, 91058 Erlangen (DE)
(72) Inventor: Hildebrand, Uwe, 81739 München (DE); Lampka, Kai, 81739 München (DE)
(74) Representative: Continental Corporation

(57) **Abstract**

Embodiments of the present disclosure provide a vehicle, an apparatus, a computer program, and a method for a data processing circuit and for executing applications. Embodiments of the proposed concept provide a method for a data processing circuit and for executing applications including at least one safety-relevant application and at least one non-safety relevant application using the same OS and memory. The method comprises obtaining first memory information on a predefined memory space allocated to the safety-relevant application and obtaining second memory information on a memory space for the non-safety-relevant application. Further, the method comprises applying a monitoring operation for checking, based on the first and second memory information, if the non-safety-relevant application uses memory space allocated to the safety-relevant application to verify spatial FFI. According to embodiments of the method the monitoring is executed in a Trusted Execution Environment (TEE).

## Description

Embodiments of the present disclosure provide a vehicle, an apparatus, a computer program, and a method for a data processing circuit and for executing applications. In particular, embodiments of the present disclosure relate to embedded computing and to a concept for trusted supervision of spatial Freedom-From-Interference (FFI) of safety-relevant applications and non-safety relevant applications.

An operating system (OS) kernel of a system may be a piece of software with a high or even the highest privilege level. In practice, several executables running under its control depend on it. In consequence, the OS kernel may inherit the highest safety integrity level (SIL) among applications it hosts and any error there may potentially cause an error in the application, e.g., violation of spatial freedom from interference by incorrect page table handling.

In automotive applications, the use of an OS with a safety feature allocated to it, may require that either the OS kernel needs to be qualified in accordance with the highest automotive SIL (ASIL) allocated to the applications running on it, or the OS kernel itself is put under surveillance and with respect to a specific property. In the latter case, the monitor and not the monitored entity must be in adherence to the highest ASIL allocated to the application software. Moreover, it must be ensured that the monitor runs in a different context, such that it is free from interference of the monitored entity, here the OS. In practice, this may be ensured by using a dedicated safety computing element for the monitoring software and ensure its isolation by hardware elements which ensure that software not running in a safe environment can neither access the memory of the monitor nor alter the configuration of the hardware element itself.

But even, when deciding to use a fully safety certified OS, there is another obstacle to overcome. When running a system of mixed-criticality on a single processor and addressing the highest safety integrity level (ASIL-D), it is commonly required to run parts of the processor in lockstep mode. This is to ensure that errors in the hardware are detected. Random bitflips in the arithmetic logic unit (ALU) of a compute core are an example to this. Modern processors allow one to freely group cores into pairs of lock stepping cores, where at the same time other compute cores may execute in single-step mode. This feature can be exploited as follows: one either let all compute cores run in lock step mode, halving the number of available compute cores. According to another idea, one lets the applications which contribute to functions of the highest safety integrity level exclusively run on the lock-stepping cores, where all other applications execute on the single-stepping cores.

With an OS capable of symmetric multiprocessing, the OS kernel potentially uses each core where an application is running. In a setup where all cores are running in lock step mode, this is no issue as the hardware cannot secretly inject errors into the OS kernel. However, lock stepping logic will raise an error indication.

When using lock and single stepping cores at the same time and having a single OS instance running, such a hidden error injection can take place. Thereby, the hardware redundancy is without effect as hardware errors occurring with the single stepping cores are potentially secretly inject into the OS kernel. These errors may in turn lead to a corruption of any safety applications running on the lock stepping cores. In other words: hardware errors occurring on single stepping cores can induce errors with applications of the highest SIL when using lockstep and single step cores at the same time and a single OS image.

To overcome this problem, one may partition the system and run a separate OS kernel, including two instances of the same OS kernel or two different ones. One OS kernel or instance is exclusively used on the lock stepping cores for running applications of the highest SIL. The other OS or OS kernel instance is exclusively used on the single stepping cores for executing all other applications. Once again, hardware mechanism needs to be put in place to ensure that the OS with the safety applications is isolated in memory from the other software stack.

The use of an unqualified OS hosting safety applications whilst guaranteeing freedom from interference is not possible as external monitoring of an OS and its page tables is unheard of. Instead, the OS is commonly certified in accordance with the highest SIL of any application it hosts. This increases the development and maintenance costs for the OS significantly, specifically when considering complex general-purpose OS. Thereby, a cost explosion with system of mixed criticality hosted on common processor is seen.

Using two OSs, where each OS is qualified up to the highest SIL of any of the applications running on top of it. This leads to the following drawbacks:
a. A strict partitioning of the system into two subsystems each with its own OS kernel has the potential to double the resource consumption, memory, computation and storage-wise and at least with respect to the used OS kernel.
b. With a single OS kernel, applications can use the common OS infrastructure to migrate workloads to a compute core, exchange data, request service from another or even share devices. When using two different OS kernel images at the same time, this infrastructure is not available as it is limited to the context of the respective OS kernel and its applications. To still facilitate interaction among applications running on different OS kernels, it is required to implement a framework which handles all of the cross-OS kernel interaction of applications.

If the OS is not qualified, or the temporary absence of HW errors cannot be guaranteed, the processor must be equipped with an additional hardware element which ensures that the safety monitor running on the same processor is isolated from the rest of the system. Moreover, the hardware element must be shielded against re-configurations from not authorized elements. This limits the used processor and increase the cost significantly. Common processors lack such an element.

Hence, there may be a demand of an improved concept addressing the above drawbacks.

In particular, it may be a demand to ensure also during runtime that safety critical system feature of spatial freedom-from-interference (FFI) - in particular memory isolation between safety partitions and QM (i.e., non-safety) partitions - is maintained. I.e., it shall be detected if by functional misbehavior of the running system this memory isolation is compromised.

To achieve a higher degree of confidence, one idea of the present disclosure is that a monitoring and detection function is carried out in a separate execution environment, isolated from the OS kernel, and running on hardware which can be considered as error free. According to another aspect, the use of lock stepping mode or periodic execution of a software test library which signals faulting hardware is suggested. In such a setup, the monitoring allows one to run safety applications on an OS kernel which is not in adherence with the highest or a required SIL of any of the safety applications. Whenever using a single OS kernel image and running compute cores in lock and single stepping mode in parallel, the proposed scheme may ensure that the occurrence of undetected errors occurring on single stepping cores and secretly affecting the OS kernel running on the lock stepping cores will not be unnoticed. In this way the scheme may ensure that a violation of the memory-wise isolation of safety critical applications by non-safe applications, including the OS kernel and with respect to hardware errors or programming errors in the OS kernel will not be unnoticed.

Embodiments of the proposed concept provide a method for a data processing circuit and for executing applications including at least one safety-relevant application and at least one non-safety relevant application using the same OS and memory. The method comprises obtaining first memory information on a predefined memory space allocated to the safety-relevant application and obtaining second memory information on a memory space for the non-safety-relevant application. Further, the method comprises applying a monitoring operation for checking, based on the first and second memory information, if the non-safety-relevant application uses memory space allocated to the safety-relevant application to verify spatial FFI. According to embodiments of the method the monitoring is executed in a Trusted Execution Environment (TEE). In this way, FFI of applications using the same OS and (physical) memory may be ensured/verified. The monitoring operation, therefore, may be understood as Trusted FFI Supervision Service (TFSS).

In some embodiments, the data processing circuit includes one or more cores for executing the applications. In such cases, the TEE may include or use at least one core separate from the one or more cores for executing the applications. In this way, a hardware-based isolation of the monitoring for FFI of the other applications.

Optionally, the TEE may be software-based. In this way, further hardware components, e.g., a separate core and, thus, additional costs may be saved.

In practice, at least one of the first and the second memory information may comprise at least one pointer, page table, and/or memory mapping database indicating the memory space for the non-safety-relevant application.

In some embodiments, the method further comprises causing entering a safe state if the non-safety-relevant application uses memory space allocated exclusively to the safety-relevant application. In this way, further damage and/or interference of applications with the monitoring may be avoided.

In practice, the safety-relevant application may be a safety-relevant application for a vehicle and causing entering a safe state may comprise bringing the vehicle in a safe state, e.g., stopping the vehicle. In this way, e.g., collisions or the like may be avoided to prevent damage.
In some embodiments, the method further comprises obtaining first core information on at least one core for the safety-relevant application and obtaining second core information on at least one core for the non-safety relevant application and applying the monitoring operation for checking based on the first and second core information if the non-safety relevant application uses the core for the safety-relevant application.

Optionally, the method further comprises causing entering a safe state if the non-safety-relevant application uses the core for the safety-relevant application. In this way, (further) damage and/or interference with other applications may be avoided. As outlined previously, e.g., in automotive implementations, collisions or the like may be avoided.

In practice, the monitoring operation may be executed repeatedly. In this way, the FFI may be verified constantly.

As a skilled person having benefit from the present disclosure will appreciate that some or all steps of the proposed method may be executed by a computer or any other programmable hardware. Accordingly, embodiments may provide a computer-implemented method.

Accordingly, embodiments may also provide a computer program comprising instructions which, when the computer program is executed by a computer, cause the computer to carry out the method proposed herein.

Further embodiments provide an apparatus comprising one or more interfaces for communication and a data processing circuit configured to execute the method proposed herein.

In some embodiments, the data processing circuit comprises at least one core for executing the non-safety relevant application and at least two lock stepping cores for executing the safety-relevant application. In this way, lock stepping can be applied to monitor the safety-relevant application and detect errors in the safety-relevant application.

A vehicle comprising the apparatus proposed herein.

### Brief description of the drawings

Fig. 1 and 2 show a block diagram schematically illustrating an architecture for executing safety-relevant applications and non-safety relevant applications;
Fig. 3 shows a flow chart schematically illustrating an embodiment of a method for a data processing circuit and for executing applications including at least one safety-relevant application and at least one non-safety relevant application using the same OS and memory;
Fig. 4 and 5 show a block diagram schematically illustrating embodiments of the proposed approach;
Fig. 6 shows a flow chart schematically illustrating an embodiment of an initialization of the monitoring;
Fig. 7 shows a flow chart schematically illustrating a use case of the present approach; and
Fig. 8 shows a block diagram schematically illustrating an apparatus according to the proposed approach.

### Detailed description of the drawings

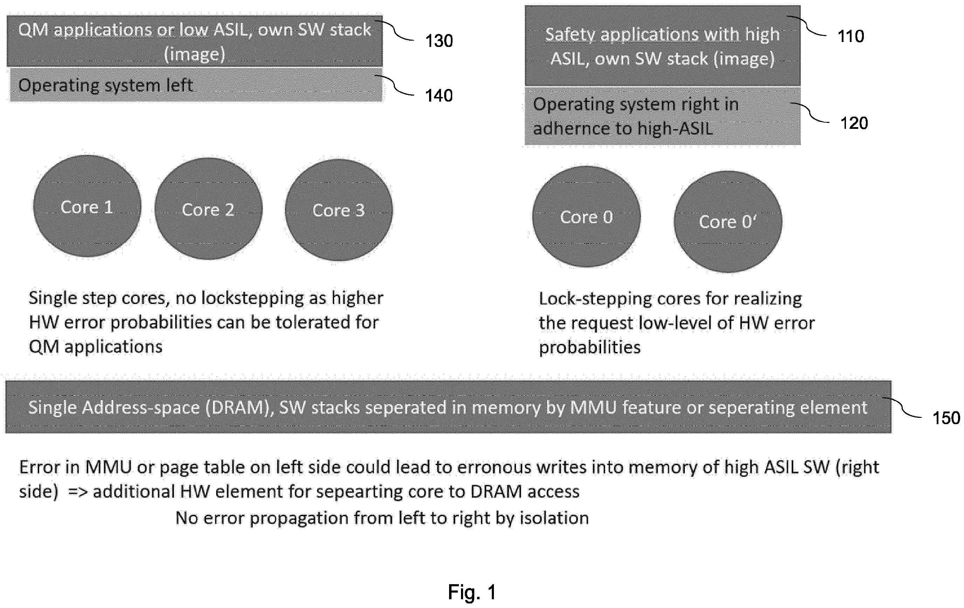

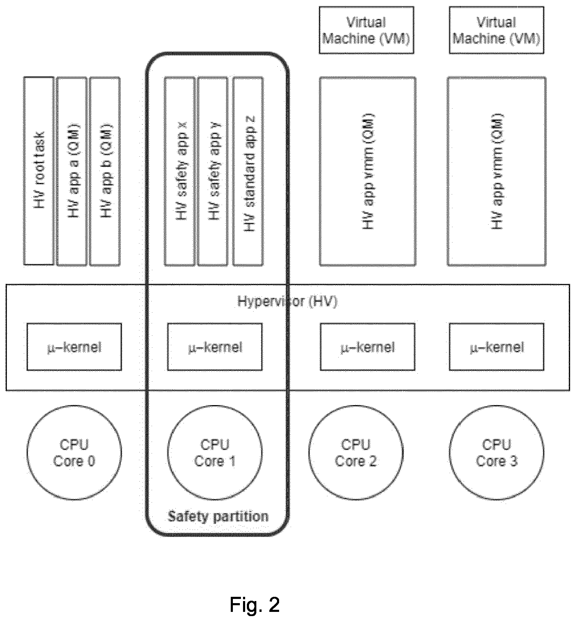

In context of the present disclosure, FFI of applications (e.g., computer programs) refers to the ability to operate without disruption or interference from other applications. FFI is particularly desired in safety-critical use cases, e.g., in automotive implementations. In such use cases, e.g., errors may be induced from non-safety relevant applications and propagated to safety-relevant applications. This is outlined in more detail below with reference to Figs. 1 and 2.

Fig. 1 and 2 show a block diagram schematically illustrating an architecture for executing safety-relevant applications and non-safety relevant applications.

FFI, e.g., may be achieved by memory isolation between partitions for the execution of the applications. In practice, safety-relevant applications requiring an (A)SIL A or higher and less or non-safety-relevant application requiring lower or the lowest (A)SIL ("quality managed", QM) shall be executed. Accordingly, in practice, e.g., a QM partition for non-safety relevant applications requiring ASIL "QM" and a safety partition for safety-relevant applications. In some use cases, it may be desired that the integrity of memory isolation is supervised during runtime, e.g., by (regularly) monitoring the whole set of memory pages available to the QM partition and checking against memory regions exclusively allocated to the safety partition.

As can be seen from Fig. 1, some concepts may provide for separate operating systems 120 and 140 and separate cores Core 0, 0', 1, 2, and 3 for QM applications 130 and safety-relevant applications 110. For this, the operating system for the safety-relevant applications may need to a required high ASIL, e.g., ASIL A - D and the cores 0 and 0' may need to be operated in lock step mode. In practice, a memory management unit (MMU) may be provided for memory isolation in a common single address space (e.g., dynamic random-access memory, DRAM). Apart from this, the safety-relevant applications and the non-safety relevant applications may be in a separate software (SW) stack. Still, due to errors in the MMU or a page table, errors may propagate from the QM partition to the safety partition. Such errors, e.g., lead to erroneous writes into memory of safety-relevant applications ("ASIL SW") So, the architecture of Fig. 1 may lack FFI. Therefore, additional hardware, e.g., a separate memory or a hardware (HW) based memory range separation function may be required for memory isolation.

However, it may be desired to save additional hardware, e.g., for technical reasons and/or cost reasons. One idea of the present disclosure it to deploy a trustworthy monitoring for verifying memory isolation. In this way, costly additional hardware may be saved while adhering to a certain ASIL.

Fig. 2 depicts an envisioned system setup based on a multi-core CPU ("central processing unit") sub-system. It contains multiple CPU cores 0, 1, 2, and 3 as well as a micro-kernel ("µ-kernel") based hypervisor (HV) executed on each CPU core as an example of an OS to be monitored. In this case, the OS that shall be monitored provides at least one safety partition for safety-relevant applications "HV safety app x, y, z" as well as a QM partition for non-safety relevant applications "HV root task" and "HV app a (QM)". Apart from this, the system setup provides for virtual machines (VMs) as well as respective virtual machine monitors, vmm, ("HV app vmm (QM)").

As can be seen from Fig. 2, the safety partition may provide a dedicated CPU Core, here CPU core 1.

According to one idea of the proposed concept, the monitoring, herein also referred to as "Trusted FFI supervision service", runs on the same core as the supervised OS, which immediately implies that the monitor runs outside of the OS's context.

For error detection, e.g., lock-stepping, error correction code (ECC), protection and/or execution of a SW test library may be applied. The monitoring shall now check that no safety exclusive memory region allocated to any of the safety applications (executed on CPU core 1) is fully or partially contained in the QM set of page tables (or QM memory mapping database).

Optionally, it also verifies that none of the QM applications (or QM threads) uses CPU core 1 (which is exclusively used for safety partition) in its CPU affinity.

Since, the monitoring runs in a trusted environment, the monitoring is trustworthy so that any certain ASIL may be satisfied.

For this, software for the monitoring may run on a hardware element which can be understood as so called "safety island" or "secure world". A safety island/secure world, in the context of the present disclosure, is a computing element the hardware of which is error free and the memory of which is shielded against external or random modification. For this, a dedicated CPU core with hardware features for memory partitioning may be used. Alternatively, or additionally, a dedicated CPU mode with elevated privileges can be used and when having memory separation available. In this way, a separate trusted execution environment (TEE) may be provided for the monitoring, which is independent from the normal execution environment that shall be supervised. In consequence, the CPU core only needs to be in this trusted CPU mode while performing the mentioned monitoring tasks and does not need to be statically excluded from normal mode of operation, i.e., is also available for non-trusted tasks. So, in both setups, lock stepping may be dispensable for a desired ASIL. Generally speaking, the separate trusted monitoring allows to dispense with separate memories and/or separate OS kernels complying with certain safety requirements, e.g., a certain ASIL.

So, FFI may be ensured provided that the core running the monitoring is free from hardware errors whilst executing the monitor or at least allows one the detection of such errors at runtime. In practice, error detection is ensured by running the relevant core in lockstep mode or executing a software test library periodically and with respect to the used hardware.

Ideally, the spatial FFI supervision executed by the monitor is not limited to memory isolation but also covers the affinity of CPU cores, i.e., it is also checked that CPU cores exclusively reserved for safety partitions do not execute any QM threads.

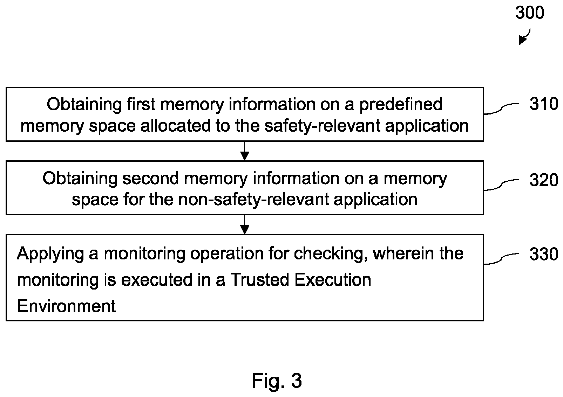

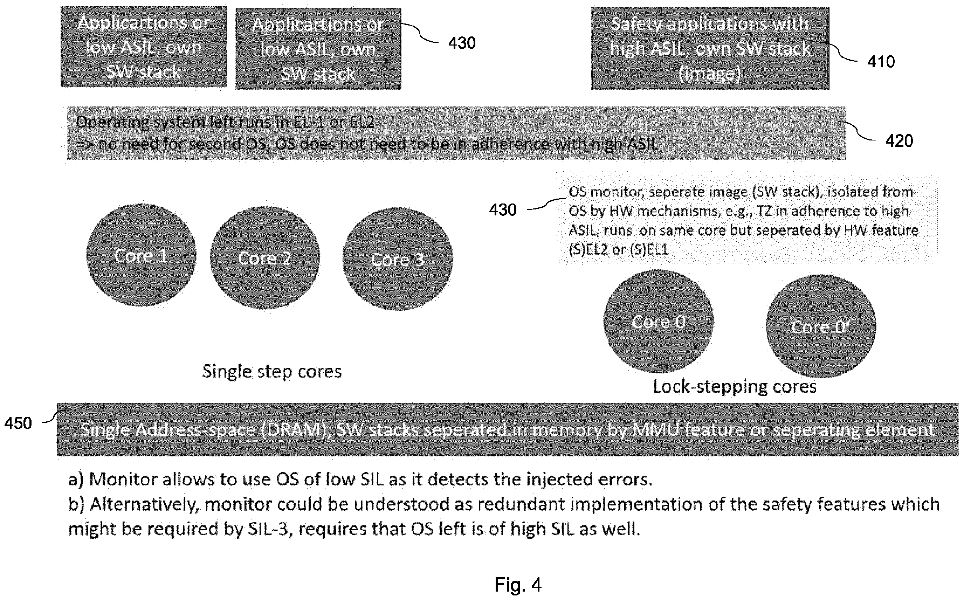

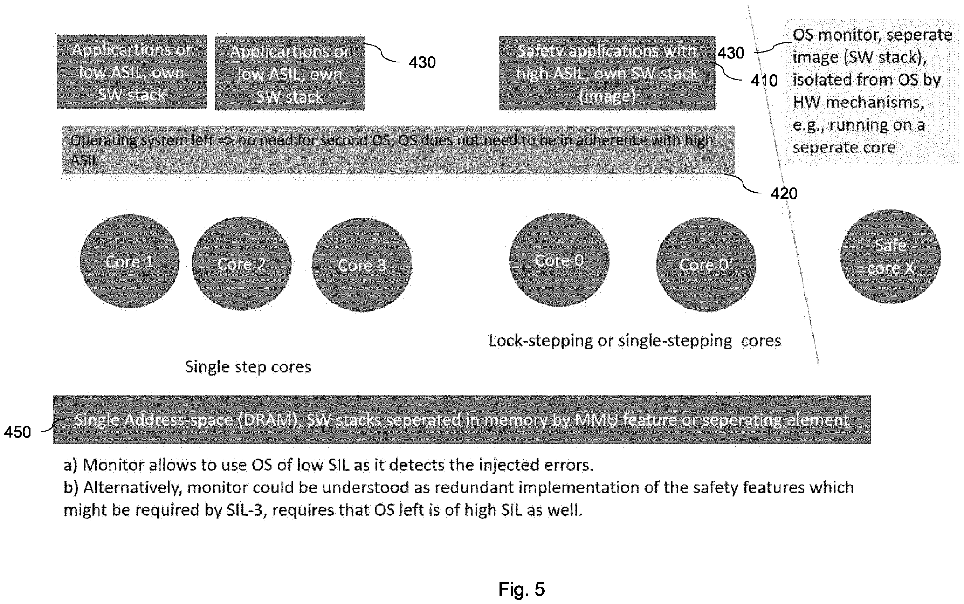

It should be noted that the proposed concept is not limited to a certain implementation of the safety island, to a certain kind of memory, and/or data processing circuit, but can be applied for arbitrary appropriate systems/data processing circuits, various applications (software, computer programs), and/or various use cases. So, in practice, the safety island can be any kind of TEE, as laid out in a more general summary of a method according to the proposed concept below with reference to Fig. 3. Different examples thereof are described with reference to Figs. 4 and 5.

Fig. 3 shows a flow chart schematically illustrating an embodiment of a method 300 for a data processing circuit and for executing applications including at least one safety-relevant application and at least one non-safety relevant application using the same OS and memory.

In automotive use cases, the safety-relevant application, e.g., serves a safety-critical function, e.g., for maneuvering the vehicle or for safety means (e.g., airbags, emergency brake system, and/or the like). In contrast, the non-safety relevant application, e.g., may serve for mere entertaining functions. So, the safety-relevant application, e.g., may require ASIL A, B, C, or D while the non-safety relevant application may need the lowest ASIL - "QM".

As can be seen from the flow chart, the method 300 comprises obtaining 310 first memory information on a predefined memory space allocated to the safety-relevant application and obtaining 320 second memory information on a memory space for the non-safety-relevant application. For example, the first and the second memory information indicates which memory areas (of the common memory) are dedicated to the safety-relevant application and the non-safety relevant application, respectively. So, the second memory information as well as the first memory information may comprise at least one pointer, page table, and/or memory mapping database indicating the memory space for the non-safety-relevant application.

Further, the method 300 comprises applying 330 a monitoring operation for checking, based on the first and second memory information, if the non-safety-relevant application uses memory space allocated to the safety-relevant application to verify spatial freedom-from-interference, FFI, wherein the monitoring is executed in a Trusted Execution Environment, TEE.

So, the monitoring operation is configured to compare the first and second memory information to check whether the safety-relevant application and the non-safety relevant application (unintentionally) share the same memory space to verify if the non-safety relevant application interferes with the safety-relevant application. In this way, it can be ensured that errors do not propagate from the non-safety relevant application to the safety-relevant application to maintain the functional integrity of the safety-relevant application. So, the proposed concept may provide a higher safety.

Fig. 4 shows a block diagram schematically illustrating an embodiment of the proposed approach.

As the skilled person having benefit from the present disclosure will appreciate, the proposed approach may be applied for an arbitrary number of safety-relevant and/or non-safety-relevant applications. Accordingly, the present embodiment provides for the execution of multiple safety-relevant applications 410 and non-safety relevant applications 430. As the proposed approach allows, the system, e.g., a data processing circuit, provides a single OS 420 and a single memory 450 ("address-space", e.g., a Dynamic Random Access Memory, DRAM). The OS 420, e.g., runs in exception level (EL) 1 or 2. According to the present approach, as well a monitor 430 (also referred to as "OS monitor") is provided to monitor the memory isolation of the safety-relevant applications 410 from the non-safety relevant applications 430. As indicated by a separate box for the monitor 430, it is executed in a separate trusted environment. For this, a separate (trusted) image or SW stack may be used.

As indicated, the monitor 430 is isolated from the OS 420 in the sense that the errors or malfunctions of the OS 420 cannot interfere with the monitor 430. For this, e.g., appropriate hardware (HW) mechanisms are proposed. In implementations, the monitor 430, e.g., is executed in the so-called "TrustZone". In other examples, another kind of trusted execution environment (TEE) may be provided for the execution of the monitor 430 (e.g., using Trusted Execution Technology (TXT), Platform Security Processor (PSP), Software Guard Extensions (SGX)). The TEE can be also understood as a so-called "(secure/trusted) enclave". In practice, the TEE may adhere to the same SIL as the safety-relevant application, e.g., to comply with desired security requirements or standards.

For monitoring the memory isolation, the monitor 430, e.g., receives one or more pointers, page tables, and/or a memory mapping database indicating which memory space is used by the safety-relevant applications and the non-safety relevant applications, herein also referred to as "QM applications". In embodiments, such memory information may indicate which memory space is/will be used by a safety-relevant application and which memory space is/will be used by a non-safety relevant application.

The memory information could e.g., be statically defined at compile/build time or it could be determined by a (safety) root task during start-up of the monitored OS 410 and passed to the monitor 430 by the (safety) root task which is running on the monitored OS 410. The memory information is the target configuration to be monitored at runtime. In this context it is expected that all defined or configured safety-relevant applications are started first by the (safety) root task to ensure that resources needed by the safety applications are available and will be allocated before any QM application is launched.

In some embodiments, the described supervision/monitoring shall (at least) be periodically triggered, e.g., during system runtime using a secure interrupt which cannot be disabled/masked by software running outside the secure world. The configuration of such a safe interrupt may be carried out by a CPU/SoC (system on a chip) specific trusted firmware component which may be executed early in a boot sequence of the system, or an initialization run of the monitor. It could also be contemplated to apply the monitor 430 periodically triggering an external watchdog in order to ensure correctness of configuration and functioning at start-up and during runtime. In some embodiments, the cores may be ARM CPU cores based on ARMv8 and may exhibit an ARM Trustzone. In this case, ARM Trusted Firmware (ATF) may be deployed which may operate on the highest privilege level (EL3) and implement a switch between the secure world and the non-secure world. It may also provide a framework for starting the execution of a trusted world image and a configuration of secure interrupts that cannot be changed from the non-secure world. System Monitor Call (SMC) instruction/exception may be used to call ATF and SMC Calling Convention (SMCCC) may define details of corresponding data exchange. The ARM Trustzone is an adequate example of the envisioned safety island which provides sufficient trustworthiness of the monitor 430, i.e., that the monitor 430 reliably verifies the FFI of the safety-relevant applications and the non-safety relevant applications.

In practice, the monitor 430, e.g., verifies through comparison of the memory information if any memory space is (unintentionally) shared by a safety-relevant application and a non-safety relevant application. In this way, it can be checked if data and, thus, errors may propagate from the non-safety relevant application to the safety-relevant application. The monitor 430 may be configured to report that the memory isolation is "violated". This, e.g., allows to take safety measures to prevent malfunctions of the safety-relevant application.

As mentioned previously, in doing so, the TEE provides that the monitor 430 functions reliably to comply with certain safety requirements, e.g., according to a certain SIL or ASIL. So, the monitor 430 may ensure a certain safety level of the safety-relevant application. Accordingly, the OS 420 may not need to adhere with a required safety/integrity level. So, in practice, the safety/integrity level of the OS 420 may be lower than the safety/integrity level of the TEE and/or lower than required for the safety-relevant application. This may have different advantages over other concepts:
1. An operating system not matching to the highest SIL of any of its hosted application can be used for running the safety applications; provided the monitor and the relevant parts of the HW adheres with the SIL.
2. When using single and lock stepping cores at the same time, a single OS image can be used, avoiding the implementation of a safe cross OS communication framework.

As further indicated by Fig. 4, the system may comprise multiple processing cores, here Cores 0, 0', 1, 2, 3, and 4. The proposed approach also allows that the monitor 430 runs on the same core or cores as the OS. For example, in the shown system, the monitor 430 runs on Core 0 and 0' as well as the OS 420 and the safety-relevant applications 410. For even higher security, Core 0 and 0' may be operated in lock-stepping mode. The non-safety relevant applications 430 may run on the other Cores 1, 2, and 3. In this way, interference from executing the safety-relevant applications and the non-safety relevant applications by the same cores may be avoided. To make sure that safety-relevant applications and non-safety relevant applications are executed by different cores, the monitor 430 may further obtain first core information indicating which core or cores are/will be used by the safety-relevant application and second core information indicating which core or cores are/will be used by the non-safety-relevant application. In this way, the monitor 430 can check, based on the first and second core information, whether the safety-relevant application and the non-safety relevant application unintentionally share the same core, i.e., that one or more of the cores execute the safety-relevant application and the non-safety relevant application (at least partly). This particularly allows to detect potential interference between the safety-relevant application and the non-safety relevant application from using the same core and, if so, take safety measures.

The core information may be statically defined at compile/build time, at least entry pointers to access and find such information.

While the core information may change during system runtime (e.g., when new QM threads are created), the memory information may be fixed once the (safety) root task has launched all safety-relevant applications. Therefore, the core information may be located in memory region(s) shared between the monitor 430 and the OS 410 running outside the safety island/TEE, and which executes the safety-relevant applications and the non-safety relevant applications. For some trust levels of the proposed FFI supervision function, the memory information may be stored in a memory region/area dedicated to the safety island.

As the skilled person having benefit from the present disclosure will appreciate that using the same core/s for the safety-relevant applications 410 and the monitor 430 allows to save a further dedicated core for the monitor 430.

However, the monitor 430 may be executed by a separate dedicated core, as well, as laid out with reference to another embodiment of the present approach shown in Fig. 5.

As can be seen in Fig. 5, the system may optionally include a further dedicated core, herein referred to as "Safe core X", which runs the monitor 430. In this way, the monitor 430 may be free from any interference with other processes not related to the monitor 430. So, in this way, interference with other processes may be avoided even more reliably.

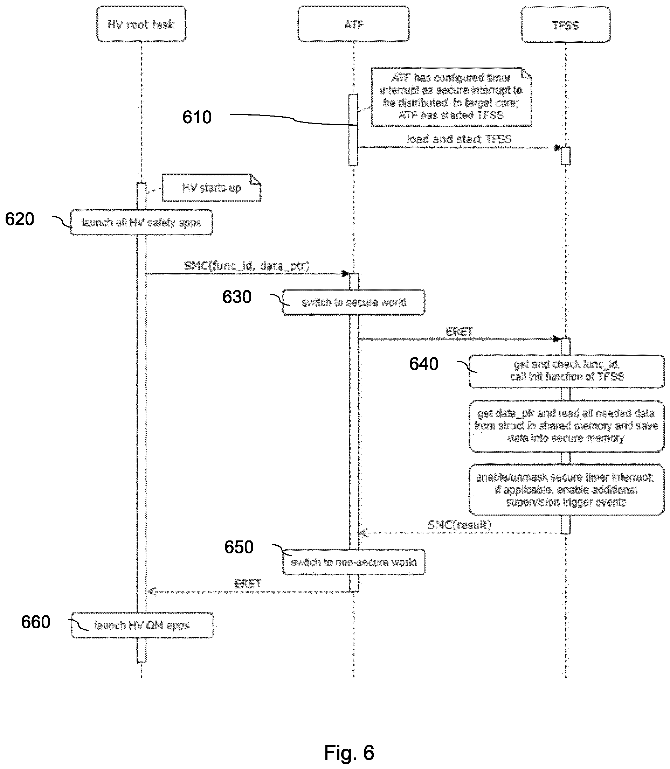

The skilled person will appreciate that the proposed approach may be applied in different software and hardware configurations. In practice, implementations of the proposed approach may come along with some adaptions, e.g., of a boot process, as laid out in more detail below with reference to Fig. 6 which shows a flow chart schematically illustrating an embodiment of an initialization of the monitoring, also referred to as "Trusted FFI Supervision Service (TFSS)".

The initialization of the TFSS may be done in several ways depending on the target system setup and the applicable build time vs. runtime configuration of the system:
If the memory and core information for the TFSS is available at compile/build time and if no other trusted (secure) services are implemented in secure world (trusted execution environment), then the core and memory information can be provided to TFSS at compile/build time. In this case no explicit signaling towards TFSS for initialization is required. Within TFSS the supervision can then just be locally started either when a pre-defined pattern in shared memory (e.g., along with mapping database) is detected or even simply after having waited for a pre-defined time allowing the OS running outside the Trustzone to be completely started up.

Else, explicit signaling from non-secure world ((safety) root task) towards secure world (TFSS) may be used for initialization of TFSS, as laid out in more detail below with reference to Fig. 6.

### TFSS initialization by explicit signaling:

Although the proposed approach is applicable for various software and hardware configurations, the TFSS initialization sequence described here refers to the preferred embodiment based on ARMv8 CPUs and usage of ATF and Secure Monitor Call (SMC) by way of example.

For a SMC call towards TFSS following properties are seen in accordance with the Secure Monitor Call Calling Convention (SMCCC):
- A suitable service call range (e.g., for Trusted OS, Trusted Apps, OEM Service) shall be (re-)used.
- Preferably SMC fast calls shall be used, so that public world interrupts (i.e. non-secure interrupts) will not preempt TFSS execution in secure world.
- The function identifier (func_id) and parameters are passed in registers towards TFSS and the results are also returned in registers; it is proposed to pass the pointer to a data structure containing the memory and core information by TFSS as one parameter (data_ptr) of the SMC call.

It shall be noted that, in case of not using an operating system (like OPTEE-OS), in secure world, ATF has already started TFSS in secure world before the monitored OS is started outside the safety island, e.g., the non-secure world. So, as can be seen from the flow chart, the ATF may load and start the TFSS in a first step 610.

Then, in subsequent steps 620, the HV starts and launches the safety-relevant applications ("HV safety apps"). In doing so, the HV transmits an SMC including the core and memory information ("data_ptr") to the ATF.

In a following step 630, the ATF, then, switches to the secure world. In doing so, the ATF forwards the memory and core information to the TFSS.

In following steps 640, the TFSS, then, gets and checks func_id and calls a respective initialization function. It further stores the memory and core information in a secure memory and enables/unmasks a secure timer interrupt. Optionally, the TFSS also enables additional supervision trigger events.

Further, the TFSS returns an SMC indicating the initialization and/or monitoring result.

The ATF, then, switches back to the non-secure world in step 650 before the HV root task launches QM applications in a further step 660.

Also, an alternative system setup including OP-TEE OS can be covered and in such a setup the TFSS can run as a Trusted Application on top of OPTEE-OS and may need a slightly adapted initialization sequence. The same holds if the safety island is established by a separated computing core outside the reach of the monitored OS.

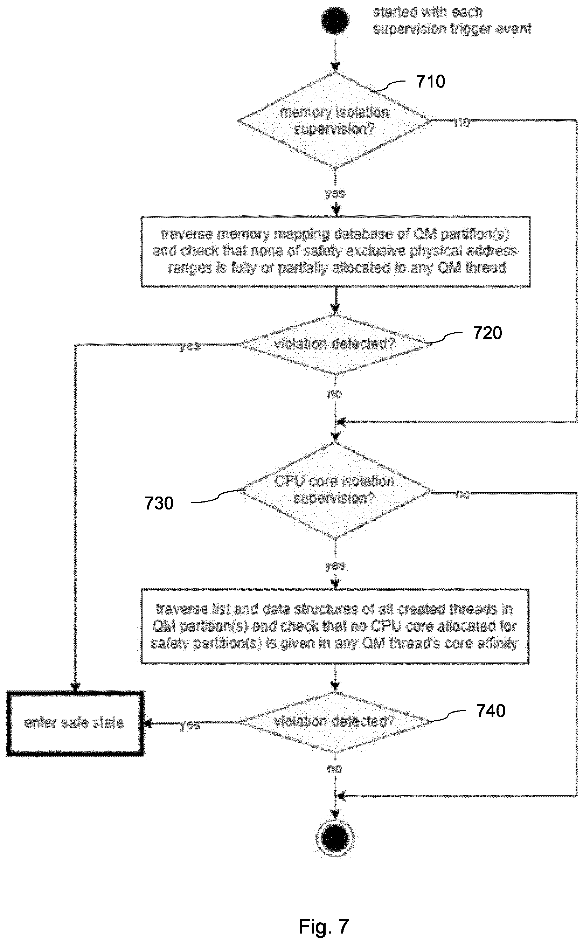

Fig. 7 shows a flow chart schematically illustrating an exemplary use case of the present approach.. In case of using the Trustzone, all executed on same CPU core, monitor, and monitored OS. When all CPU cores of the CPU subsystem can access in secure mode the TFSS code and data in (secure) memory, then the actual TFSS runtime supervision function may also be executed on different CPU cores than used for TFSS initialization.

As can be seen from the flow chart, in some embodiments, the monitoring of memory isolation may be optional (at least temporarily). So, in a first step 710, it may be first decided if the monitoring of memory isolation is executed. If so, the memory information is evaluated to check if safety exclusive physical address ranges (indicated in first memory information) are fully or partially mapped to any QM application. Then, if an unintentional violation of the desired memory isolation is detected, in a following step 720, a safe state is entered.

In the case that no monitoring of the memory isolation is desired, it may be skipped.

Then, in step 730, it may be decided if the monitoring of the core isolation is executed. If so, the core information (e.g., data structures of created threads) in QM partitions are checked to verify if no core allocated for a safety-relevant application is used in any QM applications core affinity.

If a core isolation violation is detected, a safe state is entered in a next step 740.

In the case that no monitoring of the core isolation is desired, it can be skipped.

The skilled person will appreciate that the monitoring of the core and the memory isolation may be performed also simultaneously or in an arbitrary order. So, the monitoring of the core isolation may be also executed prior to the monitoring of the memory isolation.

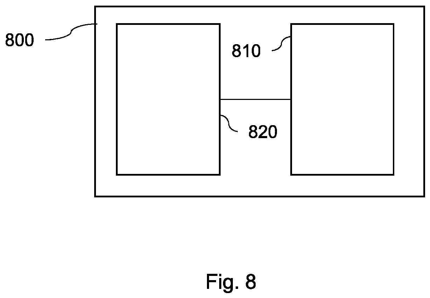

The proposed approach may be also implemented in an apparatus, as laid out in more detail below with reference to Fig. 8.

Fig. 8 shows a block diagram schematically illustrating an embodiment of such an apparatus 800. The apparatus comprises one or more interfaces 810 for communication and a data processing circuit 820 configured to execute the proposed method.

In embodiments, the one or more interfaces 810 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 820 may correspond to or comprise any type of programable hardware. So, examples of the data processing circuit 820, e.g., comprise a memory, microcontroller, field programable gate arrays, one or more central, and/or graphical processing units. To execute the proposed method, the data processing circuit 820 may be configured to access or retrieve an appropriate computer program for the execution of the proposed method from a memory of the data processing circuit 820 or a separate memory which is communicatively coupled to the data processing circuit 820.

In practice, the proposed apparatus may be installed on a vehicle. So, embodiments may also provide a vehicle comprising the proposed apparatus. In implementations, the apparatus, e.g., is part or a component of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (300) for a data processing circuit and for executing applications including at least one safety-relevant application and at least one non-safety relevant application using the same operating system, OS, and memory, the method (300) comprising:
obtaining (310) first memory information on a predefined memory space allocated to the safety-relevant application;
obtaining (320) second memory information on a memory space for the non-safety-relevant application; and
applying (330) a monitoring operation for checking, based on the first and second memory information, if the non-safety-relevant application uses memory space allocated to the safety-relevant application to verify spatial freedom-from-interference, FFI, wherein the monitoring is executed in a Trusted Execution Environment, TEE.

2. The method (300) of claim 1, wherein the data processing circuit includes one or more cores for executing the applications, and wherein the TEE includes at least one core separate from the one or more cores for executing the applications.

3. The method (300) of claim 1, wherein the TEE is software-based.

4. The method (300) of any one of the preceding claims, wherein at least one of the first and the second memory information comprises at least one pointer, page table, and/or memory mapping database indicating the memory space for the non-safety-relevant application.

5. The method (300) of any one of the preceding claims, wherein the method (300) further comprises causing entering a safe state if the non-safety-relevant application uses memory space allocated exclusively to the safety-relevant application.

6. The method (300) of any one of the preceding claims, wherein the safety-relevant application is a safety-relevant application for a vehicle, and wherein causing entering a safe state comprises bringing the vehicle in a safe state.

7. The method (300) of any one of the preceding claims, wherein the method (300) further comprises:
obtaining first core information on at least one core for the safety-relevant application;
obtaining second core information on at least one core for the non-safety relevant application; and
applying the monitoring operation for checking based on the first and second core information if the non-safety relevant application uses the core for the safety-relevant application.

8. The method (300) of claim 7, wherein the method (300) further comprises causing entering a safe state if the non-safety-relevant application uses the core for the safety-relevant application.

9. The method (300) of any one of the preceding claims, wherein the monitoring operation is executed repeatedly.

10. A computer program comprising instructions which, when the computer program is executed by a computer, cause the computer to carry out the method (300) of any one of the preceding claims.

11. An apparatus (800) comprising:
one or more interfaces (810) for communication; and
a data processing circuit (820= configured to execute the method (300) of any one of the claims 1 to 9.

12. The apparatus (800) of claim 11, wherein the data processing circuit comprises at least one core for executing the non-safety relevant application and at least two lock stepping cores for executing the safety-relevant application.

13. A vehicle comprising the apparatus (800) of claim 11 or 12.
